Europäisches Patentamt

(19) European Patent Office

Office européen des brevets

(11) Numéro de publication: **0 196 681**
**B1**

(12) **FASCICULE DE BREVET EUROPEEN**

(45) Date de publication du fascicule du brevet: **31.10.90**

(51) Int. Cl.⁵: **H 04 N 7/167, H 04 N 11/08**

(21) Numéro de dépôt: **86200009.8**

(22) Date de dépôt: **07.01.86**

(54) **Procédé et dispositifs de déchiffrement ou de chiffrement appliqués au standard de télévision de type MAC.**

(30) Priorité: **08.01.85 FR 8500179**
**19.11.85 FR 8517072**

(43) Date de publication de la demande:
**08.10.86 Bulletin 86/41**

(45) Mention de la délivrance du brevet:
**31.10.90 Bulletin 90/44**

(84) Etats contractants désignés:
**DE FR GB**

(56) Documents cités:
**WO-A-84/04013**

(73) Titulaire: **LABORATOIRES D'ELECTRONIQUE PHILIPS**
**3, Avenue Descartes**
**F-94450 Limeil-Brévannes (FR)**
(84) **FR**

(73) Titulaire: **N.V. Philips' Gloeilampenfabrieken**
**Groenewoudseweg 1**
**NL-5621 BA Eindhoven (NL)**
(84) **DE GB**

(72) Inventeur: **Marie, Gérard**
**Société Civile S.P.I.D. 209 rue de l'Université**
**F-75007 Paris (FR)**
Inventeur: **Arragon, Jean-Pierre**
**Société Civile S.P.I.D. 209 rue de l'Université**
**F-75007 Paris (FR)**

(74) Mandataire: **Landousy, Christian et al**
**Société Civile S.P.I.D. 156, Boulevard Haussmann**
**F-75008 Paris (FR)**

EP 0 196 681 B1

Courier Press, Leamington Spa, England.

**Description**

La présente invention concerne un procédé et un dispositif de décodage et de déchiffrement de signaux ayant subi d'une part un codage de type MAC et d'autre part un chiffrement par permutation circulaire autour d'un ou de deux point de coupure.

Le codage de signaux vidéo selon le standard MAC (Multiplex Analogique de Composantes) consiste à assurer, pour chacune des lignes de l'image, la transmission successive des composantes analogiques de chrominance et de luminance. De tels signaux sont aptes, bien entendu, à être brouillés (ou chiffrés) avant leur transmission, puis déchiffrés à la réception. La demande de brevet WO—A—84 04013 décrit un exemple de procédé de brouillage appliqué à de tels signaux de type MAC ainsi qu'un récepteur de signaux de télévision brouillés conformément à ce procédé. Ledit procédé consiste à séparer au moins l'une des deux composantes de chrominance et de luminance autour d'un point de coupure qui lui est propre et à modifier l'ordre des fractions de composantes ainsi définies. Un exemple particulier d'un tel mode de brouillage est le chiffrement dit par permutation circulaire.

Un tel chiffrement par permutation circulaire consiste à couper, à l'émission, le signal d'image en un point quelconque et à permuter les deux fragments de ligne utiles ainsi formés, la permutation circulaire inverse étant bien entendu effectuée à la réception pour restituer en clair le signal d'image ainsi brouillé. Ce chiffrement est à un point de coupure lorsqu'une seule des deux composantes de chrominance ou de luminance est fractionnée en deux signaux, ou à deux points de coupure lorsque chacune des deux composantes subit ladite permutation circulaire autour d'un point de coupure qui lui est propre.

Le problème qui se pose est celui de l'échantillonnage, à des fréquences différentes à l'émission et à la réception, de signaux de type MAC ayant subi à l'émission un chiffrement. Ce problème peut se rencontrer en effet lorsque l'on voudra par exemple émettre des signaux de télévision codés selon un standard MAC avec un format d'image plus grand que le format 4/3 et/ou avec une résolution plus grande que celle des émissions précédentes, et que l'on voudra que ces émissions soient reçues de façon compatible par les récepteurs de première génération adaptés à un format d'image plus réduit (4/3) et/ou à une résolution plus faible.

Pour donner des exemples concrets, on peut se placer dans le cas où les émissions de première généraion correspondent au standard MAC défini dans la publication SPB 284 3e version révisée (décembre 1984) de l'UER (Union Européenne de Radiodiffusion). Avant codage MAC et chiffrement, les signaux sont échantillonnés à raison d'environ 700 points pour la luminance (fréquence d'échantillonnage 13,5 MHz) et de 350 points pour la chrominance (fréquence d'échantillonnage 6,75 MHz). Lorsque ces signaux sont codés en MAC en utilisant un rapport des taux de compression chrominance à luminance $r = C_c/C_y = 2$, la fréquence d'échantillonnage $f_o$ en sortie du codeur chiffreur est de 20,25 MHz. Le chiffrement est réalisé par permutation circulaire effectuée soit sur les signaux de luminance Y et de chrominance C pris séparément, soit sur l'ensemble des signaux Y et C, ces signaux subissant des décalages temporels multiples d'un intervalle de base $\tau_o = 1/f_o \sim 49$ ns.

Dans le but d'augmenter la résolution luminance, on peut envisager dans le futur de choisir un rapport $r$ des taux de compression égal à 4 au lieu de 2. Ceci est déjà possible lorsque les signaux sont transmis en modulation d'amplitude sur des réseaux câblés par exemple. Ce sera également possible dans le futur pour les transmissions par satellites en modulation de fréquence lorsque la sensibilité des récepteurs aura été améliorée et qu'ils pourront restituer, avec un rapport signal sur bruit convenable, des signaux qui auront subi des compressions temporelles d'un facteur 5 au lieu du facteur 3 actuel. Avec ce rapport $r = 4$, si la fréquence d'échantillonnage et l'intervalle de base utilisés pour le chiffrement restent inchangés, le signal de luminance comportera environ 840 intervalles au lieu de 700. Pour effectuer le déchiffrement à partir du même intervalle de base qu'à l'émission, il faudrait donc disposer dans le récepteur de mémoires de luminance de 840 échantillons au lieu de 700, ce qui n'est pas prévu dans les récepteurs de première génération construits avec des mémoires de 700 échantillons seulement et rend cette solution incompatible avec ces récepteurs.

Pour pourvoir se contenter de mémoires de luminance de 700 échantillons, on peut alors songer à réduire la fréquence d'échantillonnage à la réception à la valeur $f_r = {}^5/_6 f_o = 16,875$ MHz. Il faut alors modifier les adresses a des points de coupure (données par un générateur d'adresses pseudo-aléatoires) en calculant les nouvelles adresses $a' = {}^5/_6 a$. Comme, à l'émission, il y a, par exemple dans le signal de luminance, 256 adresses possibles séparées par des intervalles égaux à $2 \tau_o$, la nouvelle adresse $a'$ correspondra deux fois sur trois à une valeur non entière. Dans le cas du signal de chrominance, pour lequel les adresses sont séparées par un intervalle égal à $\tau_o$, c'est cinq fois sur six que l'adresse $a'$ ne sera pas entière. Comme on ne met en mémoire qu'un nombre discrete d'échantillons (700 pour Y, 175 pour C), l'adresse réelle utilisée sera la valeur entière de $a'$ la plus proche de sa valeur théorique et l'on fera donc une erreur sur la référence temporelle de chaque ligne qui pourra atteindre un demi-intervalle d'échantillonnage à la réception. Une ligne verticale de l'image sera donc restituée en fait comme une ligne légèrement en zig-zag, l'amplitude crête à crête de ce zig-zag atteignant environ la largeur d'un espace d'échantillonnage, c'est-à-dire $^1/_{700}$e de la largeur d'image dans le cas de la chrominance et $^1/_{175}$e dans celui de la luminance.

Lorsqu'on engendre la fréquence $f_r = {}^5/_6 f_o$, la division par 6 donne six possibilités de phase pour la fréquence $f_r$. Il y a donc six signaux d'échantillonnage possibles $f_{r_0}, f_{r_1}, \ldots f_{r_5}$ qui diffèrent l'un de l'autre d'un écart de phase égal à π/3. Si l'on passe du signal $f_{ri}$ au signal $f_{ri+1}$, on avance de π/3 la phase de la fréquence d'échantillonnage, ce qui revient à avancer d'une valeur égale à $\tau_r/6$ les instants d'échantillonnage. Lors de la lecture de la mémoire, cela se traduira sur l'image par un décalage vers la droite de la ligne correspondante d'une distance égale à $1/6 \times 1/700$ de la largeur d'image.

Un premier but de l'invention est de proposer un procédé de décodage et de déchiffrement de signaux de type MAC chiffrés par permutation circulaire dans lequel on corrige le défaut introduit par le changement de la fréquence d'échantillonnage de réception en profitant de cette possiblité de décaler les lignes restituées.

Le procédé selon l'invention est à cet effet, dans le cas d'un chiffrement à deux points de coupure, caractérisé en ce que l'on utilise à la réception une fréquence d'échantillonnage $f_r$ différente de $f_o$ et reliée à cette dernière par la relation $f_r=(q/p)f_o$, p et q étant entiers, en ce que les nouvelles adresses de points de coupure sont prises égales aux valeurs entières les plus proches des résultats $a'_c$ et $a'_y$ des opérations $a'_c=(p/q)a_c$ et $a'_y=(p/q)a_y$, et en ce que, au début de l'écriture en mémoire de chaque composante C ou Y, à partir de l'abscisse $a'_c$ ou $a'_y$ respectivement, la fréquence d'échantillonnage $f_r$ subit soit une avance de phase qui, exprimée en période d'échantillonnage $\tau_r=1/f_r$, est égale à la partie fractionnaire $g_c$ ou $g_y$ du résultat $a'_c$ ou $a'_y$ lorsque $g_c$ ou $g_y$ est inférieure à $1/2$, ou respectivement inférieure ou égale à $1/2$, soit un retard de phase égal à $1-g_c$ ou $1-g_y$ lorsque $g_c$ ou $g_y$ est supérieure ou égale à $1/2$, ou respectivement supérieure à $1/2$.

A ce procédé correspond un dispositif de décodage et de déchiffrement prévu pour sa mise en oeuvre, ledit dispositif étant composé essentiellement de circuits d'entrée, dont un convertisseur analogique-numérique qui reçoit les signaux MAC brouillés, de circuits de traitement de la composante de luminance, de circuits de traitement de la composante de chrominance, et de circuits de commande de déchiffrement, et étant caractérisé en ce que la fréquence d'échantillonnage $f_r$ dudit convertisseur est différente de la fréquence d'échantillonnage correspondante $f_o$ utilisée lors du chiffrement mais reliée à celle-ci par la relation $f_r=(q/p)f_o$, et en ce qu'il comprend des moyens d'ajustement des adresses des points de coupure à des valeurs entières les plus proches des valeurs $a'_c$ et $a'_y$, et des moyens d'avance ou de retard de phase à l'échantillonnage selon la valeur de la partie fractionnaire $g_c$ ou $g_y$ desdites valeurs $a'_c$ et $a'_y$.

Dans le cas d'un chiffrement à un point de coupure, le procédé selon l'invention est caractérisé en ce que l'on utilise à la réception une fréquence d'échantillonnage $f_r$ différente de $f_o$ et reliée à cette dernière par la relation $f_r=(p/q)f_o$, p et q étant entiers, en ce que le nouvelle adresse du point de coupure est prise égale à la valeur entière la plus proche du résultat $a'$ de l'opération $a'=(p/q)a$, et en ce que, au début de l'écriture en mémoire de la composante C à partir de l'abscisse $a'$, la fréquence d'échantillonnage $f_r$ subit soit une avance de phase qui, exprimée en période d'échantillonnage $\tau_r=1/f_r$, est égale à la partie fractionnaire g du résultat $a'$ lorsque g est inférieure à $1/2$, ou respectivement inférieure ou égale à $1/2$, soit un retard de phase égal à $1-g$ lorsque g est supérieure ou égale à $1/2$, ou respectivement supérieure à $1/2$.

A ce procédé correspond de même un dispositif de décodage et de déchiffrement prévu pour sa mise en oeuvre, ledit dispositif étant composé essentiellement de circuits d'entrée, dont un convertisseur analogique-numérique qui reçoit les signaux MAC brouillés, de circuits de traitement de la composante de luminance, de circuits de traitement de la composante de chrominance, et de circuits de commande de déchiffrement, et étant caractérisé en ce que la fréquence d'échantillonnage $f_r$ dudit convertisseur est différente de la fréquence d'échantillonnage correspondante $f_o$ utilisée lors du chiffrement mais reliée à celle-ci par la relation $f_r=(q/p)f_o$, et en ce qu'il comprend des moyens d'ajustement de l'adresse du point de coupure à une valeur entière la plus proche de la valeur $a'$, et des moyens d'avance ou de retard de phase à l'échantillonnage selon la valeur de la partie fractionnaire g de ladite valeur $a'$.

Les procédés et structures ainsi proposés sont avantageux en ce sens qu'on profite effectivement de la possibilité de décalage des lignes restituées en faisant commander le choix de la phase de la fréquence $f_r$ par la valeur g de la partie fractionnaire du résultat de l'opération $a'=5a/6$.

En effet, suivant que cette valeur est égale à 0, $1/6$, $2/6$ ... $5/6$, on choisira la fréquence $f_{ro}$, $f_{r1}$, ... $f_{r5}$, c'est à-dire que l'on introduira une avance égale à 0, $1/6 \tau_r$ ... $5/6 \tau_r$, ce qui permettra de faire coïncider sur deux verticales le début et la fin de chaque ligne. Cela revient à avancer l'instant d'échantillonnage du premier échantillon reçu vers l'échantillon répété (overlap), ce qui n'occasionne pas de discontinuité dans le signal si les références temporelles de la synchronisation et de la vidéo sont bien respectées. Afin de laisser une certaine tolérance sur cette référence temporelle, il est préférable de répartir les décalages en avance et en retard en choisissant de faire subir à la fréquence $f_o$ soit une avance de phase qui, exprimée en période $\tau_r$, est égale à g lorsque g est inférieure (inférieure ou égale) à $1/2$, soit un retard de phase égal à $1-g$ lorsque g est supérieure ou égale (supérieure) à $1/2$. L'adresse du point de coupure à prendre en compte est alors la valeur entière immédiatement inférieure à $a'$, lorsque g est inférieure (inférieure ou égale) à $1/2$, et immédiatement supérieure à $a'$, lorsque g est supérieure ou égale (supérieure) à $1/2$.

La correction du défaut ne sera cependant pas totale lorsque la longueur de la ligne restituée ne sera pas égale à la longueur originelle, ce qui est le cas lorsque, à la fréquence $f_r$, il n'y a pas un nombre entier d'intervalles d'échantillonnage entre le premier échantillon utile reçu et l'échantillon répété (overlap) qui suit le dernier échantillon utile reçu.

L'invention y remédie par une quatrième mesure, le procédé étant alors caractérisé en outre en ce que, dans le cas du chiffrement à deux points de coupure, lorsque l'on atteint l'adresse maximale en mémoire de chrominance ou de luminance, l'on recommence l'écriture des échantillons au début de la mémoire de

3

chrominance ou de luminance après avoir marqué un temps d'arrêt correspondant à quelques échantillons de transition et après avoir fait subir à la fréquence d'échantillonnage $f_r$ un retard de phase qui, exprimé en période d'échantillonnage $\tau_r=1/f_r$, est égal à la partie fractionnaire $h_c$ ou $h_y$ du résultat $\delta'_c$ ou $\delta'_y$ de l'opération $\delta'_c=(p/q)\delta_c$ ou $\delta'_y=(p/q)\delta_y$, $\delta_c$ étant égal au nombre d'intervalles d'échantillonnage, à la fréquence $f_o$, qui séparent le premier échantillon C utile émis de l'échantillon répété qui suit le dernier échantillon C utile émis et $\delta_y$ étant égal au nombre d'intervalles d'échantillonnage, à la fréquence $f_o$, qui séparent le premier échantillon Y utile émis de l'échantillon répété qui suit le dernier échantillon Y utile émis.

Dans le cas du chiffrement à un point de coupure, cette quatrième mesure est telle que le procédé est caractérisé en ce que, en plus des temps d'arrêt qui correspondent à quelques échantillons de transition et que l'on marque quand on passe de l'écriture dans la mémoire de chrominance à celle dans la mémoire de luminance puis de l'écriture dans la mémoire de luminance de nouveau à celle dans la mémoire de chrominance, l'on fait subir à la fréquence d'échantillonnage $f_r$, après le premier temps d'arrêt, un retard de phase qui, exprimé en période $\tau_r$, est égal à la partie fractionnaire $h_c$ du résultat $\delta'_c$ de l'opération $\delta'_c=(p/q)\delta_c$, $\delta_c$ étant égal au nombre d'intervalles d'échantillonnage, à la fréquence $f_o$, correspondant à la somme du signal C et de la première transition, et, après le second temps d'arrêt, un retard de phase égal à la partie fractionnaire $h_y$ du résultat $\delta'_y$ de l'opération $\delta'_y=(p/q)\delta_y$, $\delta_y$ étant égal au nombre d'intervalles d'échantillonnage, à la fréquence $f_o$, correspondant à la somme du signal Y et de la seconde transition.

Les particularités et avantages de l'invention apparaîtront maintenant de façon plus précise dans la suite de la description, dans laquelle:

—les figures 1 et 2 illustrent les propositions de codage et chiffrement de l'UER de décembre 1984 dans le cas d'un chiffrement respectivement à deux points de coupure et à un seul point de coupure situé dans le signal de chrominance;

—la figure 3 détaille les principes des procédés de chiffrement à un et deux points de coupure;

—la figure 4 décrit à titre d'exemple, un dispositif de déchiffrement fonctionnant aussi bien avec un point qu'avec deux points de coupure.

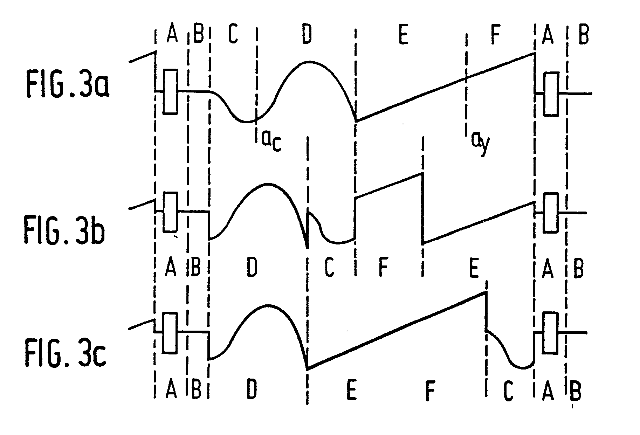

Le procédé de chiffrement à deux points de coupure consiste, à l'émission, à fractionner sur chaque ligne de balayage les deux composantes de chrominance et de luminance, indépendamment l'une de l'autre, chacune en deux signaux consécutifs dont le premier est alors retardé de la durée du second et le second avancé de la durée du premier. Ce procédé est mis en évidence sur la figure 3, où la figure 3a montre le signal vidéo de type MAC, non brouillé, pour une ligne de balayage, et la figure 3b ce même signal mais brouillé: par rapport au signal non brouillé composé du mot de synchronisation A, de la période de référence B, du signal de chrominance CD et du signal de luminance EF (ces deux derniers signaux étant représentés avec des formes quelconques, bien distinctes pour la compréhension du traitement effectué), le signal brouillé est donc transmis selon la séquence ABDCFE qui n'affecte pas la période de référence. Le traitement à la réception consiste alors à assurer le rétablissement des séquences CD et EF, pour la reconstitution en clair des composantes de chrominance et de luminance de la ligne de balayage considérée.

Dans le cas du procédé de chiffrement à un point de coupure, seule la composante chrominance est fractionnée. La figure 3c montre comme le signal brouillé est alors transmis selon la séquence ABDEFC, la première partie C du signal de chrominance étant alors transmise après la fin de la transmission du signal de luminance EF qui ne subit aucune coupure. Comme précédemment, le traitement à la réception consiste à assurer le rétablissement des séquences CD et EF.

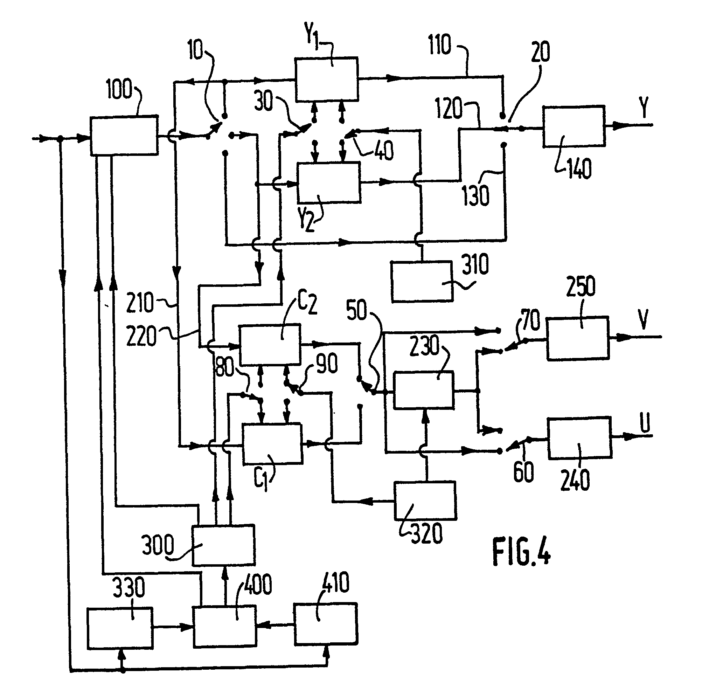

Cette reconstitution est possible à l'aide du dispositif de déchiffrement représenté sur la figure 4 qui peut fonctionner aussi bien avec un point qu'avec deux points de coupure et qui comprend les éléments essentiels d'un décodeur classique numérique de signaux vidéo de type MAC auxquels sont associés un compteur modifié d'adressage écriture des mémoires, un générateur de séquences numériques pseudoaléatoires et, pour la commande de ce dernier, un circuit de contrôle d'accès. Plus précisément, ce dispositif de déchiffrement est composé des éléments suivants:

1. des circuits d'entrée:
(a) un convertisseur analogique-numérique 100 qui reçoit les signaux MAC brouillés;
(b) un commutateur 10 à trois entrées;

2. des circuits de traitement de la composante de luminance:
(c) un ensemble de trois voies en parallèle 110, 120, 130, qui relient les trois sorties de ce commutateur 10 aux trois entrées d'un commutateur 20, les première et deuxième voies 110 et 120 comprenant respectivement une première et une deuxième mémoire $Y_1$ et $Y_2$ de stockage de la composante de luminance, adressées alternativement par l'intermédiaire de commutateurs 30 et 40 par un compteur d'écriture 300 et un premier compteur de lecture 310, alors que la troisième voie 130 est une voie directe;
(d) un premier convertisseur numérique-analogique 140 qui reçoit la sortie du commutateur 20 et délivre le signal de luminance couramment appelé Y;

3. des circuits de traitement de la composante de chrominance:
(e) un ensemble de deux voies en parallèle 210 et 220 qui, par l'intermédiaire d'une troisième et d'une

quatrième mémoires $C_1$ et $C_2$ de stockage de la composante de chrominance adressées alternativement par l'intermédiaire de commutateurs 80 et 90 par le compteur d'écriture 300 et un deuxième compteur de lecture 320, sont reliées respectivement aux deux entrées d'un commutateur 50, la sortie de ce commutateur étant reliée d'une part à l'entrée d'une ligne à retard numérique 230 commandée par le compteur de lecture 320 (et réalisée par exemple sous forme d'un registre à décalage) pour retarder de la durée d'une ligne la composante de chrominance, et d'autre part à la première entrée respectivement d'un commutateur 60 et d'un commutateur 70 dont l'autre entrée reçoit la sortie de ladite ligne à retard;

(f) des deuxième et troisième convertisseurs numériques-analogiques 240 et 250 qui reçoivent la sortie des commutateurs 60 et 70 respectivement et délivrent les signaux de différence de couleur couramment appelés U et V;

4. des circuits de commande de déchiffrement:

(g) un compteur 330 des lignes à l'intérieur de chaque trame;

(h) un générateur de séquences numériques pseudoaléatoires 400 synchronisé par l'intermédiaire du compteur de lignes 330;

(i) un circuit de contrôle d'accès 410 qui fournit au générateur de séquences pseudoaléatoires un mot de départ constituant la clé de chiffrement.

Dans le cas d'un chiffrement avec deux points de coupure, le fonctionnement du dispositif de déchiffrement ainsi composé est le suivant. La générateur de séquences pseudoaléatoires 400, qui est synchronisé par le compteur 330 et qui reçoit du circuit de contrôle d'accès 410 la clé déchiffrée par celui-ci dès la réception des signaux MAC brouillés, génère un mot numérique pseudoaléatoire dont on déduit les deux abscisses $a_c$ et $a_y$ des points de fractionnement des composantes analogiques de chrominance et de luminance, obtenus lors du brouillage à l'émission. Dès lors, à la réception des signaux, on écrit la fraction D, en commençant à l'adresse de l'abscisse $a_c$ puis la fraction C en commençant par l'adresse 0; cette écriture est effectuée successivement dans la mémoire $C_1$ ou la mémoire $C_2$ suivant la parité de la ligne, à l'aide du compteur d'écriture 300 commandé par le générateur de séquences pseudoaléatoires 400 et adressant l'une ou l'autre des deux mémoires en fonction de la position du commutateur 80.

L'écriture de la composante de chrominance étant achevée, on écrit de même, successivement dans la mémoire $Y_1$ ou la mémoire $Y_2$ suivant la parité de la ligne et à l'aide du même compteur d'écriture 300 qui adresse l'une ou l'autre de ces deux mémoires en fonction de la position du commutateur 30, la fraction F en commençant à l'adresse de l'abscisse $a_y$ puis la fraction E en commençant par l'adresse 0.

Enfin, pour restituer les signaux de luminance et chrominance, on relit simultanément dans l'ordre croissant des adresses les mémoires $Y_1$ et $C_1$, ou $Y_2$ et $C_2$, à l'aide des compteurs 310 et 320. Les fréquences de lecture des mémoires luminance et chrominance sont choisies de telle sorte que les signaux utiles EF et CD sont restitués en un temps correspondant au temps de balayage utile de la ligne, soit 52 microsecondes environ dans le standard européen actuel 625 lignes. La fréquence de lecture chrominance est donc inférieure à la fréquence de lecture luminance qui elle-même est inférieure à la fréquence d'écriture du compteur 300. Le compteur de lecture 320 adresse les mémoires $C_1$ et $C_2$ alternativement par l'intermédiaire du commutateur 90, et le compteur 310 les mémoires $Y_1$ et $Y_2$ alternativement par l'intermédiaire du commutateur 40.

On notera ici que les neuf commutateurs 10 à 90 sont commandés par le compteur 330, mais ces liaisons de commande ne sont pas représentées, afin de ne pas surcharger la figure 4.

La présence de la ligne à retard numérique 230 n'est pas liée au déchiffrement lui-même; cette ligne à retard est prévue pour permettre la restitution simultanée, en sortie des convertisseurs numériques-analogiques 240 et 250, des signaux de différence de couleur U et V qui sont transmis alternativement. La commande de cette ligne à retard 230 est assurée par le compteur de lecture 320 des mémoires $C_1$ et $C_2$.

Dans le cas d'un chiffrement avec un seul point de coupure, situé dans le signal de chrominance, le générateur de séquences pseudoaléatoires génère un mot numérique pseudoaléatoire dont un déduit l'abscisse a du point de fractionnement de la composante analogique de chrominance. Dès lors, à la réception des signaux, un écrit la fraction du signal qui arrive en premier dans la mémoire de chrominance $C_1$ ou $C_2$, en commençant à l'adresse de l'abscisse a. Quand on atteint l'adresse maximale de la mémoire de chrominance, on observe un temps d'arrêt correspondant à une période de transition entre signaux chrominance et luminance puis on inscrit la suite du signal dans la mémoire de luminance $Y_1$ ou $Y_2$, en commençant par l'adresse 0 et en finissant par l'adresse la plus élevée. Quand on atteint l'adresse maximale de la mémoire de luminance, on observe un deuxième temps d'arrêt correspondant à la deuxième période de transition entre signaux de luminance et de chrominance, puis on poursuit la mise en mémoire du signal dans la mémoire de chrominance en commençant par l'adresse 0. La restitution simultanée des signaux de luminance et de chrominance se fait de façon identique au cas du chiffrement à deux points de coupure décrit ci-dessus.

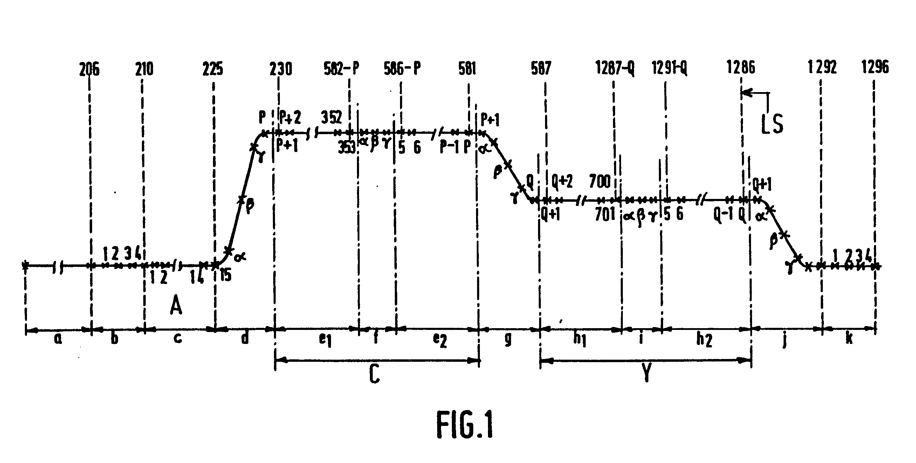

Sur la figure 1, qui montre la forme d'onde du signal de modulation à l'émission dans le cas du chiffrement à deux points de coupure, on a désigné par A l'intervalle d'alignement du signal, C la durée du signal de chrominance, Y celle du signal de luminance et LS le dernier échantillon à mémoriser. Le nombre d'intervalles, à la fréquence d'échantillonnage $f_o=20,25$ MHz, que l'on doit considérer est égal à:

(a) $\begin{cases} 352 \text{ intervalles C, soit 349 échantillons utiles et 3 transitions} \\ 700 \text{ intervalles Y, soit 697 échantillons utiles et 3 transitions.} \end{cases}$

En choisissant un rapport des taux de compression $r=C_c/C_y=4$, on peut avoir soit:

(b) $\begin{cases} 212 \text{ intervalles C, soit 209 échantillons utiles et 3 transitions} \\ 840 \text{ intervalles Y, soit 837 échantillons utiles et 3 transitions} \end{cases}$

soit:

(c) $\begin{cases} 213 \text{ intervalles C, soit 210 échantillons utiles et 3 transitions} \\ 839 \text{ intervalles Y, soit 836 échantillons utiles et 3 transitions} \end{cases}$

En choisissant une fréquence d'échantillonnage à la réception $f_r={}^5/_6 f_o$, le nombre d'intervalles devient $\delta'={}^5/_6$ soit:

dans le cas (b) $\begin{cases} 176 \, {}^2/_3 \text{ intervalles C} \\ 700 \phantom{\,{}^2/_3} \text{ intervalles Y} \end{cases}$

dans le cas (c) $\begin{cases} 177 \, {}^1/_2 \text{ intervalles C} \\ 699 \, {}^1/_6 \text{ intervalles Y} \end{cases}$

Pour que le dernier échantillon utile écrit, situé juste avant la coupure, soit géométriquement distant exactement d'un intervalle d'échantillonnage du premier échantillon utile écrit, situé juste après la coupure, il faut que ce dernier échantillon écrit soit distant temporellement exactement d'un intervalle d'échantillon $\tau_r$ de l'échantillon répété (overlap) qui le suit et qui coïncide géométriquement sur l'image avec le premier échantillon reçu. Comme tous les échantillons utiles devront être équidistants, le seul moyen de rattraper éventuellement une valeur non entière de l'intervalle d'échantillonnage total est de faire porter la partie non entière sur les intervalles de transition soit:

dans le cas (b) $\begin{cases} 176 \, {}^2/_3 \text{ intervalles C} = 174 \text{ échantillons utiles} + 2 \, {}^2/_3 \text{ transitions} \\ 700 \phantom{\,{}^2/_3} \text{ intervalles Y} = 697 \text{ échantillons utiles} + 3 \text{ transitions} \end{cases}$

dans le cas (c) $\begin{cases} 177 \, {}^1/_2 \text{ intervalles C} = 175 \text{ échantillons utiles} + 2 \, {}^1/_2 \text{ transitions} \\ 699 \, {}^1/_6 \text{ intervalles Y} = 696 \text{ échantillons utiles} + 3 \, {}^1/_6 \text{ transitions} \end{cases}$

Cette modification de l'intervalle de transition peut être obtenue très simplement en changeant la phase de la fréquence d'échantillonnage $f_r$ appliquée au convertisseur analogique-numérique 100 de la figure 4 lorsque l'on arrive en bout de mémoire et que l'on va écrire les échantillons suivants au début de la mémoire, après avoir marqué un temps d'arrêt de quelques échantillons de transition. En pratique, cela reviendra à effectuer les temps d'arrêts et les retards ou avances de phase suivants:

dans le cas (b) $\begin{cases} \text{pour C, arrêt durant 3 échantillons et avance de } {}^1/_3 \, \tau_r \\ \text{pour Y, arrêt durant 3 échantillons sans retard ni avance} \end{cases}$

dans le cas (c) $\begin{cases} \text{pour C, arrêt durant 3 échantillons et avance de } {}^1/_2 \, \tau_r \\ \text{pour Y, arrêt durant 3 échantillons et retard de } {}^1/_6 \, \tau_r. \end{cases}$

On voit que l'on peut choisir ici le nombre d'échantillons de transition à la réception égal au nombre d'échantillons de transition à l'émission et introduire soit un retard de phase égal, en fraction de $\tau_r$, à la partie fractionnaire h du résultat de l'opération $\delta'={}^5/_6 \delta$ lorsque h est inférieur à $^1/_2$, soit une avance égal à $1-h$ lorsque h est supérieur ou égal à $^1/_2$.

On peut remarquer que ces sauts de phase ne présentent pas de difficulté plus importante que ceux déjà prévus en fonction de l'abscisse du point de coupure car, dans le cas du chiffrement à deux points de coupure, il était déjà nécessaire en général d'effectuer un saut de phase entre l'échantillonnage du signal de chrominance et celui du signal de luminance qui avaient subi chacun des permutations circulaires à partir d'adresses différentes.

Dans le cas où la fréquence d'échantillonnage $f_r$, à la réception, est différente de celle $f_o$, à l'émission, avec $f_r=(p/q)f_o$, les sauts de phase de la fréquence d'échantillonnage $f_r$ appliquée au convertisseur analogique-numérique 100 de la figure 4 sont donc commandés à la fois par les adresses générées par le générateur de séquences pseudoaléatoires 400, pour les sauts de phase appliqués au moment de l'écriture en mémoire à partir des abscisses de coupure, et par le compteur d'écriture 300, pour les sauts de phase appliqués au moment de l'écriture en début de mémoire. C'est ce que schématisent, sur la figure 4, les liaisons qui vont du générateur 400 et du compteur 300 au convertisseur 100.

Pour déterminer la valeur de phase de $f_r$ qu'il faut choisir au moment de l'écriture en mémoire à partir de l'abscisse de coupure, le générateur de séquences pseudoaléatoires 400 doit être muni d'un circuit de multiplication par p et de division par q des adresses $a_c$ et $a_y$ qu'il fournit. La valeur entière la plus proche du résultat des opérations est envoyée au compteur d'écriture 300 pour commander les abscisses auxquelles démarre l'écriture dans la mémoire $Y_1$ ou $Y_2$ et dans la mémoire $C_1$ ou $C_2$. Les valeurs fractionnaires des résultats des opérations sont envoyées au convertisseur analogique-numérique 100 pour choisir la phase de la fréquence d'échantillonnage $f_r$.

En ce qui concerne les sauts de phase appliqués entre l'écriture en fin et en début de mémoire, comme ils ont des valeurs fixes, ils sont inscrits dans des mémoires mortes dans le compteur d'écriture 300 et leur valeur est envoyée au convertisseur analogique-numérique 100 au moment où le compteur d'écriture 300 arrive à l'abscisse maximale d'écriture dans la mémoire $C_1$ ou $C_2$ et dans la mémoire $Y_1$ ou $Y_2$, de façon que, au moment où l'écriture reprend en début de mémoire, la fréquence d'échantillonnage $f_r$ appliquée au convertisseur 100 puisse subir le saut de phase désiré.

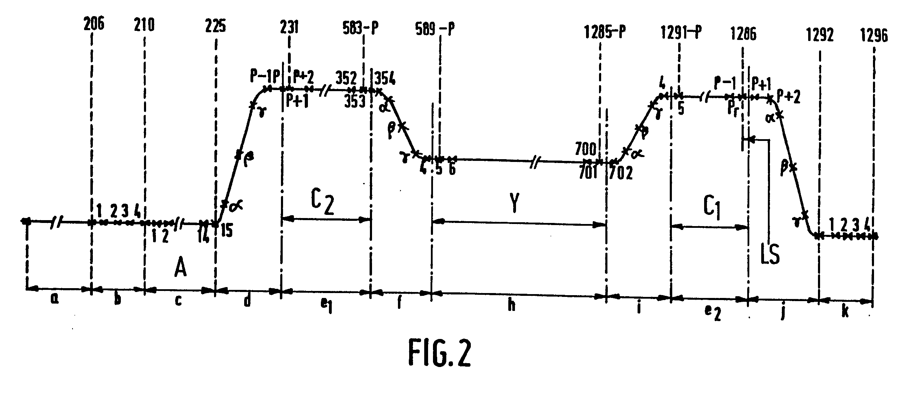

Dans le cas d'un signal ayant subi un chiffrement par permutation circulaire à un seul point de coupure situé dans le signal de chrominance, le nombre d'intervalles d'échantillonnage entre le premier échantillon C utile et l'échantillon répété qui suit le dernier échantillon C utile comprend, comme on peut le voir sur la figure 2 qui illustre (de façon similaire au cas de la figure 1) les propositions de l'UER de décembre 1984:

349 échantillons de chrominance séparés en 2 parties $C_1$ et $C_2$

697 échantillons de luminance

2×5 échantillons de transition $C_2 - Y$ et $Y - C_1$ soit en tout 1056 intervalles.

En choisissant un rapport des taux de compression $r = C_c/C_y = 4$ on peut, par exemple, répartir ces intervalles comme suit:

215 intervalles, soit 210 échantillons C utiles et 5 transitions

841 intervalles, soit 836 échantillons Y utiles et 5 transitions

En choisissant une fréquence d'échantillonnage à la réception $f_r = 5/6 f_o$, ces nombres d'intervalles deviennent respectivement $179 \, 1/6$ et $700 \, 5/6$ qui peuvent être répartis, par exemple, comme suit:

175 échantillons C suivis de $4 \, 1/6$ transitions

696 échantillons Y suivis de $4 \, 5/6$ transitions

pour que les positions du premier échantillon C en mémoire et du premier échantillon Y en mémoire, après déchiffrement, coïncident sur l'image avec les positions des premiers points C et Y utiles échantillonnés à la fréquence $f_o$ dans le codeur.

Pour assurer le raccord correct entre les différentes parties du signal, il suffit donc de prévoir, par exemple, 4 échantillons de transition aux passages $C_2 - Y$ et $Y - C_1$ et de prévoir, en outre, un retard de $1/6 \, \tau_r$ de la fréquence $f_r$ à la fin de la première transition et un retard de $5/6 \, \tau_r$ à la fin de la seconde.

Comme pour le déchiffrement avec deux points de coupure, dans le cas où la fréquence d'échantillonnage $f_r$, à la réception, est différente de celle $f_o$, à l'émission, avec $f_r = (p/q)f_o$, le générateur de séquences pseudoaléatoires 400 de la figure 4 doit être muni d'un circuit de multiplication par p et de division par q de l'adresse a qu'il fournit pour le déchiffrement à un seul point de coupure. La valeur entière la plus proche du résultat des opérations est envoyée au compteur d'écriture 300 pour commander l'abscisse à laquelle démarre l'écriture dans la mémoire $C_1$ ou $C_2$. La valeur fractionnaire du résultat de l'opération est envoyée au convertisseur analogique-numérique 100 pour choisir la phase de la fréquence d'échantillonnage $f_r$.

En ce qui concerne les sauts de phase appliqués entre les écritures en fin de mémoire de chrominance et en début de mémoire de luminance et entre les écritures en fin de mémoire de luminance et en début de mémoire de chromance, comme ils ont des valeurs fixes, ils sont inscrits dans des mémoires mortes dans le compteur d'écriture 300 et leurs valeurs sont envoyées au convertisseur analogique-numérique 100 au moment où le compteur d'écriture 300 arrive à l'abscisse maximale d'écriture dans la mémoire $C_1$ ou $C_2$ puis dans la mémoire $Y_1$ ou $Y_2$ de façon que, au moment où l'écriture reprend en début de la mémoire suivante, la fréquence d'échantillonnage $f_r$ appliquée au convertisseur 100 puisse subir le saut de phase désiré.

Dans le but de simplifier la réalisation du système, il est possible de réduire le nombre de phases utilisées en pratique pour $f_r$: on peut par exemple n'utiliser que trois phases différent l'une de l'autre de $2\pi/3$; l'erreur introduite sera égale à $\pm 1/12 \, \tau_r$ ce qui se traduira sur l'image par un épaississement d'un trait vertical égal à $1/6 \times 1/700$ de la largeur d'image en luminance, ce qui n'est certainement pas perceptible.

**Revendications**

1. Procédé de décodage et de déchiffrement de signaux ayant subi un codage de type MAC et un chiffrement par permutation circulaire à deux points de coupure, c'est-à-dire par permutation circulaire indépendante des signaux de chrominance C et de luminance Y à partir d'abscisses respectives $a_c$ et $a_y$ en utilisant une fréquence d'échantillonnage $f_o$, caractérisé en ce que l'on utilise à la réception une fréquence d'échantillonnage $f_r$ différente de $f_o$ et reliée à cette dernière par la relation $f_r = (q/p)f_o$, p et q étant entiers, en ce que les nouvelles adresses de points de coupure sont prises égales aux valeurs entières les plus proches des résultats $a'_c$ et $a'_y$ des opérations $a'_c=(p/q)a_c$ et $a'_y=(p/q)a_y$ et en ce que, au début de l'écriture en mémoire de chaque composante C ou Y, à partir de l'abscisse $a'_c$ ou $a'_y$ respectivement, la fréquence d'échantillonnage $f_r$ subit soit une avance de phase qui, exprimée en période d'échantillonnage $\tau_r=1/f_r$, est égale à la partie fractionnaire $g_c$ ou $g_y$ du résultat $a'_c$ ou $a'_y$ lorsque $g_c$ ou $g_y$ est inférieure à $1/2$, ou respectivement inférieure ou égale à $1/2$, soit un retard de phase égal à $1-g_c$ ou $1-g_y$ lorsque $g_c$ ou $g_y$ est supérieure ou égale à $1/2$, ou respectivement supérieure à $1/2$.

2. Procédé de décodage et de déchiffrement de signaux ayant subi un codage de type MAC et un chiffrement par permutation circulaire à un point de coupure, c'est-à-dire par permutation circulaire de l'ensemble des signaux de chrominance C et de luminance Y à partir d'une abscisse a située dans le signal de chrominance en utilisant une fréquence d'échantillonnage $f_o$, caractérisé en ce que l'on utilise à la réception une fréquence d'échantillonnage $f_r$ différente de $f_o$ et reliée à cette dernière par la relation $f_r=(p/q)f_o$, p et q étant entiers, en ce que la nouvelle adresse du point de coupure est prise égale à la valeur entière la plus proche du résultat a' de l'opération $a'=(p/q)a$ et en ce que, au début de l'écriture en mémoire de la composante C à partir de l'abscisse a', la fréquence d'échantillonnage $f_r$ subit soit une avance de phase qui, exprimée en période d'échantillonnage $\tau_r=1/f_r$, est égale à la partie fractionnaire g du résultat a' lorsque g est inférieure à $1/2$, ou respectivement inférieure ou égale à $1/2$, soit un retard de phase égal à $1-g$ lorsque g est supérieure ou égale à $1/2$, ou respectivement supérieure à $1/2$.

3. Procédé selon la revendication 1, caractérisé en ce que, lorsque l'on atteint l'adresse maximale en mémoire de chrominance ou de luminance, l'on recommence l'écriture des échantillons au début de la mémoire de chrominance ou de luminance après avoir marqué un temps d'arrêt correspondant à quelques échantillons de transition et après avoir fait subir à la fréquence d'échantillonnage $f_r$ un retard de phase qui, exprimé en période d'échantillonnage $\tau_r=1/f_r$, est égal à la partie fractionnaire $h_c$ ou $h_y$ du résultat $\delta'_c$ ou $\delta'_y$ de l'opération $\delta'_c=(p/q)\delta_c$ ou $\delta'_y=(p/q)\delta_y$, $\delta_c$ étant égal au nombre d'inbre d'intervalles d'échantillonnage, à la fréquence $f_o$, qui séparent le premier échantillon C utile émis de l'échantillon répété qui suit le dernier échantillon C utile émis et $\delta_y$ étant égal au nombre d'intervalles d'échantillonnage, à la fréquence $f_o$, qui séparent le premier échantillon Y utile émis de l'échantillon répété qui suit le dernier échantillon Y utile émis.

4. Procédé selon la revendication 2, caractérisé en ce que, en plus de temps d'arrêt qui correspondent à quelques échantillons de transition et que l'on marque quand on passe de l'écriture dans la mémoire de chrominance à celle dans la mémoire de luminance puis de l'écriture dans la mémoire de luminance de nouveau à celle dans la mémoire de chrominance, l'on fait subir à la fréquence d'échantillonnage $f_r$, après le premier temps d'arrêt, un retard de phase qui, exprimé en période $\tau_r$, est égal à la partie fractionnaire $h_c$ du résultat $\delta'_c$ de l'opération $\delta'_c=(p/q)\delta_c$, $\delta_c$ étant égal au nombre d'intervalles d'échantillonnage, à la fréquence $f_o$, correspondant à la somme du signal C et de la première transition, et, après le second temps d'arrêt, un retard de phase égal à la partie fractionnaire $h_y$ du résultat $\delta'_y$ de l'opération $\delta'_y=(p/q)\delta_y$, $\delta_y$ étant égal au nombre d'intervalles d'échantillonnage, à la fréquence $f_o$, correspondant à la somme du signal Y et de la seconde transition.

5. Procédé selon l'une des revendications 1 et 3, caractérisé en ce que, p et q étant premiers entre eux et q étant divisible par 2, par 3 ou par 4, l'on n'utilise que $q/2$, $q/3$, ou $q/4$ états de phase de la fréquence d'échantillonnage $f_r$, les avances et retards considérés étant multiples de $2/q\,\tau_r$, $3/q\,\tau_r$ ou $4/q\,\tau_r$, et les avances ou retards choisis étant les plus proches des valeurs calculées à partir des parties fractionnaires des résultats des opérations du type $a'=(p/q)a$ et $\delta'=(p/q)\delta$.

6. Procédé selon l'une des revendications 1, 3 et 5, caractérisé en ce que, à la réception, le nombre d'échantillons de transition, à la fréquence $f_r$, est égal au nombre d'échantillons de transition, à la fréquence $f_o$, insérés à l'émission, multiplié par la fraction p/q et arrondi à la valeur entière inférieure ou à la valeur entière supérieure.

7. Dispositif de décodage et de déchiffrement pour la mise en oeuvre du procédé selon l'une des revendications 1, 3, 5 ou 6, ledit dispositif étant composé essentiellement de circuits d'entrée, dont un convertisseur analogique-numérique qui reçoit les signaux MAC brouillés, de circuits de traitement de la composante de luminance, de circuits de traitement de la composante de chrominance, et de circuits de commande de déchiffrement, et étant caractérisé en ce que la fréquence d'échantillonnage $f_r$ dudit convertisseur est différente de la fréquence d'échantillonnage correspondante $f_o$ utilisée lors du chiffrement mais reliée à celle-ci par la relation $f_r=(q/p)f_o$, et en ce qu'il comprend des moyens d'ajustement des adresses des points de coupure à des valeurs entières les plus proches des valeurs $a'_c$ et $a'_y$, et des moyens d'avance ou de retard de phase à l'échantillonnage selon la valeur de la partie fractionnaire $g_c$ ou $g_y$ desdites valeurs $a'_c$ et $a'_y$.

8. Procédé selon l'une des revendications 2 et 4, caractérisé en ce que, p et q étant premiers entre eux et q étant divisible par 2, par 3 ou par 4, l'on n'utilise que $q/2$, $q/3$, ou $q/4$ états de phase de la fréquence d'échantillonnage $f_r$, les avances et retards considérés étant multiples de $2/q\,\tau_r$, $3/q\,\tau_r$ ou $4/q\,\tau_r$, et les avances ou retards choisis étant les plus proches des valeurs calculées à partir des parties fractionnaires des résultats des opérations $a'=(p/q)a$ et $\delta'=(p/q)\delta$.

9. Procédé selon l'une des revendications 2, 4 et 8, caractérisé en ce que, à la réception, le nombre d'échantillons de transition, à la fréquence $f_r$, est égal au nombre d'échantillons de transition, à la fréquence $f_o$, insérés à l'émission, multiplié par la fraction p/q et arrondi à la valeur entière inférieure ou à la valeur entière supérieure.

10. Dispositif de décodage et de déchiffrement pour la mise en oeuvre du procédé selon l'une des revendications 2, 4, 8 et 9, ledit dispositif étant composé essentiellement de circuits d'entrée, dont un convertisseur analogique-numérique qui reçoit les signaux MAC brouillés, de circuits de traitement de la composante de luminance, de circuits de traitement de la composante de chrominance, et de circuits de commande de déchiffrement, et étant caractérisé en ce que la fréquence d'échantillonnage $f_r$ dudit convertisseur est différente de la fréquence d'échantillonnage correspondante $f_o$ utilisée lors du chiffrement mais reliée à celle-ci par la relation $f_r=(q/p)f_o$, et en ce qu'il comprend des moyens d'ajustement de l'adresse du point de coupure à une valeur entière la plus proche de la valeur a', et des moyens d'avance ou de retard de phase à l'échantillonnage selon la valeur de la partie fractionnaire g de ladite valeur a'.

**Patentansprüche**

1. Verfahren zum Dekodieren und Entschlüsseln von Signalen, die einer MAC-Kodierung sowie einer Verschlüsselung durch zyklische Permutation an zwei Schnittstellen ausgesetzt worden sind, d.h. durch vereinzelte zyklische Permutation der Farbartsignale C und der Leuchtdichtesignale Y von den Abszissen $a_c$ bzw. $a_y$ unter Verwendung einer Abtastfrequenz $f_o$, dadurch gekennzeichnet, daß an der Empfangseite eine Abtastfrequenz $f_r$ verwendet wird, die von der Frequenz $f_o$ abweicht und durch die Beziehung $f_r=(q/p)f_o$ mit der letztgenannten in einem Verhältnis steht, wobei p und q ganze Zahlen sind, daß die neuen Adressen der Schnittstellen den jenigen ganzen Werten entsprechend gewählt werden, die den Ergebnissen $a'_c$ und $a'_y$ der rechnerischen Bearbeitungen $a'_c=(p/q)a_c$ und $a'_y=(p/q)a_y$ am nächsten liegen, und daß beim Anfang des Einschreibevorgangs jedes Anteils C oder Y in den Speicher ausgehend von der Abszisse $a'_c$ bzw. $a'_y$ die Abtastfrequenz $f_r$ entweder einer Phasenvoreilung ausgesetzt wird, die, ausgedrückt in einer Abtastperiode $\tau_r=1/f_r$, dem Bruchteil $g_c$ oder $g_y$ des Ergebnisses $a'_c$ oder $a'_y$ entspricht, wenn $g_c$ oder $g_y$ weniger ist als $^1/_2$ oder weniger als oder gleich $^1/_2$, oder aber einer Phasenverzögerung, gleich $1-g_c$ oder $1-g_y$, wenn $g_c$ oder $g_y$ höher ist als oder gleich $^1/_2$ oder höher als $^1/_2$ ist.

2. Verfahren zum Dekodieren und Entschlüsseln von Signalen, die einer MAC-Kodierung sowie einer Verschlüsselung durch zyklische Permutation an einer Schnittstelle ausgesetzt sind, d.h. durch zyklische Permutation des Signalgefüges aus dem Farbartsignal C und dem Leuchtdichtesignal Y, ausgehend von einer Abszisse a in dem Farbartsignal unter Verwendung einer Abtastfrequenz $f_o$, dadurch gekennzeichnet, daß an der Empfangseite eine Abtastfrequenz $f_r$ verwendet wird, die von $f_o$ abweicht und durch die Beziehung $f_r=(p/q)f_o$, wobei p und q ganze Zahlen sind, in einem Verhältnis zu der letzter steht, daß die neue Adresse der Schnittstelle demjenigen ganzen Wert entsprechend gewählt wird, der dem Ergebnis a' des rechnerischen Vorgangs $a'=(p/q)a$ am nächsten liegt, und daß beim Anfang des Einschreibevorgangs des Anteils C in den Speicher, ausgehend von der Abszisse a', die Abtastfrequenz $f_r$ entweder einer Phasenvoreilung ausgesetzt wird, die, ausgedrückt in einer Abtastperiode $\tau_r=1/f_r$, dem Bruchteil g des Ergebnisses a' entspricht, wenn g kleiner ist als $^1/_2$ oder kleiner als bzw. gleich $^1/_2$ ist, oder einer Phasenverzögerung gleich $1-g$ ausgesetzt wird, wenn g größer ist als oder gleich $^1/_2$ bzw. größer als $^1/_2$.

3. Verfahren nach Anspruch 1, dadurch gekennzeichnet, daß wenn die maximale Adresse in dem Farbart- oder Leuchtdichtenspeicher erreicht wird, der Einschreibevorgang der Abtastwerte am Anfang des Farbart- oder Leuchtdichtenspeichers neugestartet wird, nachdem eine Verzögerungszeit entsprechend einigen Übergangsabtastwerten markiert worden ist und nachdem die Abtastfrequenz $f_r$ einer Phasenverzögerung ausgesetzt worden ist, die, ausgedrückt in einer Abtastperiode $\tau_r=1/f_r$, dem Bruchteil $h_c$ oder $h_y$ des Ergebnisses $\delta'_c$ bzw. $\delta'_y$ der rechnerischen Bearbeitung $\delta'_c=(p/q)\delta_c$ bzw. $\delta'_y=(p/q)\delta_y$ entspricht, wobei $\delta_c$ der Anzahl Abtastintervalle bei der Frequenz $f_o$ entspricht, die den ersten ausgesendeten nützlichen Abtastwert C von dem wiederholten Abtastwert trennen, der dem letzten nützlichen ausgesendeten Abtastwert folgt, und wobei $\delta_y$ der Anzahl Abtastwertintervalle bei der Frequenz $f_o$ entspricht, die den ersten nützlichn ausgesendeten Abtastwert Y von dem wiederholten Abtastwert trennen, der dem letzten nützlichen ausgesendeten Abtastwert Y folgt.

4. Verfahren nach Anspruch 2, dadurch gekennzeichnet, daß außer den Verzögerungszeiten, die einigen Übergangsabtastwerten entsprechen und die markiert werden, wenn von dem Einschreibvorgang in den Farbartspeicher auf den Einschreibvorgang in den Leuchtdichtenspeicher übergegangen wird und danach von dem Einschreibvorgang in den Leuchtdichtenspeicher wieder auf den Einschreibvorgang in den Farbartspeicher übergegangen wird, die Abtastfrequenz $f_r$ nach der ersten Verzögerungszeit einer Phasenverzögerung ausgesetzt wird, die ausgedrückt in einer Periode dem Bruchteil $h_c$ des Ergebnisses $\delta'_c$ der rechnerischen Bearbeitung $\delta'_c=(p/q)\delta_c$ entspricht, wobei $\delta_c$ der Anzahl Abtastwertintervalle bei der Frequenz $f_o$ entspricht, die der Summe des Signals C und des ersten Übergangs entspricht, und nach der zweiten Verzögerungszeit einer Phasenverzögerung ausgesetzt wird, die dem Bruchteil $h_y$ des Ergebnisses $\delta'_y$ der rechnerischen Bearbeitung $\delta'_y=(p/q)\delta_y$ entspricht, wobei $\delta_y$ der Anzahl Abtastwertintervalle bei der Frequenz $f_o$ entsprechend der Summe des Signals und des zweiten Überganges entspricht.

5. Verfahren nach einem der Ansprüche 1 und 3, dadurch gekennzeichnet, daß p und q nicht durch einander teilbar sind und q durch 2, 3 oder durch 4 teilbar ist, wobei nur q/2-, q/3- oder q/4- Phasenzustände der Abtastfrequenz $f_r$ benutzt werden, wobei die betreffenden Voreilungen und Verzögerungen Vielfache von $(2/q)\tau_r$, $(3/q)\tau_r$ oder $(4/q)\tau_r$ sind und die gewählten Voreilungen oder Verzögerungen denjenigen Werten am nächsten liegen, die aus den Bruchteilen berechnet worden sind, die das Ergebnis waren der Bearbeitungen a'=(p/q)a und δ'=(p/q)δ.

6. Verfahren nach einem der Ansprüche 1, 3 und 5, dadurch gekennzeichnet, daß bei Empfang die Anzahl Übergangsabtastwerte bei der Frequenz $f_r$ der Anzahl bei Übertragung eingefügter mit dem Bruchtel p/q multiplizierter und auf eine ganze Zahl niedrigeren Wertes oder eine ganze Zahl höheren Wertes gerundeter Übergangsabtastwerte bei der Frequenz $f_o$ entspricht.

7. Dekodierungs- und Entschlüsselungsanordnung zum Durchführen des Verfahrens nach einem der Ansprüche 1, 3, 5 oder 6, wobei diese Anordnung im wesentlichen aus Eingangsschaltungen, von denen eine ein Analog-Digital-Wandler ist, der die verschlüsselten MAC-Signale empfängt, aus Schaltungsanordnungen zum Bearbeiten des Leuchtdichtenanteils, aus Schaltungsanordnungen zum Bearbeiten des Farbartanteils sowie aus Entschlüsselungssteuerschaltungen besteht, dadurch gekennzeichnet, daß die Abtastfrequenz $f_r$ des genannten Wandlers von der beim Entschlüsseln verwendeten entsprechenden Abtastfrequenz $f_o$ abweicht, aber durch die Beziehung $f_r=(q/p)f_o$ in einem Verhältnis dazu steht, und daß die Anordnung Mittel aufweist zum Einstellen der Adressen der Schnittstellen auf ganze Werte, die den Werten $a'_c$ und $a'_y$ am nächsten liegen, sowie Mittel zur Phasenvoreilung oder -verzögerung bei Abtastung entsprechend dem Wert des Bruchteils $g_c$ oder $g_y$ der genannten Werte $a'_c$ und $a'_y$.

8. Verfahren nach einem der Ansprüche 2 und 4, dadurch gekennzeichnet, daß p und q nicht durch einander teilbar sind und q durch 2, 3 oder durch 4 teilbar ist, wobei nur q/2-, q/3- oder q/4- Phasenzustände der Abtastfrequenz $f_r$ benutzt werden, wobei die betreffenden Voreilungen und Verzögerungen Veilfache von $(2/q)\tau_r$, $(3/q)\tau_r$ oder $(4/q)\tau_r$ sind und die gewählten Voreilungen oder Verzögerungen denjenigen Werten am nächsten liegen, die aus den Bruchteilen berechnet worden sind, die das Ergebnis waren der Bearbeitungen a'=(p/q)a und δ'=(p/q)δ.

9. Verfahren nach einem der Ansprüche 2, 4 und 8, dadurch gekennzeichnet, daß bei Empfang die Anzahl Übergangsabtastwerte bei der Frequenz $f_r$ der Anzahl bei Übertragung eingefügter mit dem Bruchtel p/q multiplizierter und auf eine ganze Zahl niedrigeren Wertes oder eine ganze Zahl höheren Wertes gerundeter Übergangsabtastwerte bei der Frequenz $f_o$ entspricht.

10. Dekodierungs- und Entschlüsselungsanordnung zum Durchführen des Verfahrens nach einem der Ansprüche 2, 4, 8 und 9, wobei diese Anordnung im wesentlichen aus Eingangsschaltungen, von denen eine ein Analog-Digital-Wandler ist, der die verschlüsselten MAC-Signale empfängt, aus Schaltungsanordnungen zum Bearbeiten des Leuchtdichtenanteils, aus Schaltungsanordnungen zum Bearbeiten des Farbartanteils sowie aus Entschlüsselungssteuerschaltungen besteht, dadurch gekennzeichnet, daß die Abtastfrequenz $f_r$ des genannten Wandlers von der beim Entschlüsseln verwendeten entspechenden Abtastfrequenz $f_o$ abweicht, aber durch die Beziehung $f_r=(q/p)f_o$ in einem Verhältnis dazu steht, und daß die Anordnung Mittel aufweist zum Einstellen der Adresse der Schnittstelle auf den Wert a', sowie Mittel zur Phasenvoreilung oder -verzögerung bei Abtastung entsprechend dem Wert des Bruchteils g des genannten Wertes a'.

**Claims**

1. A method of decoding and deciphering signals having been subjected to an encoding of the MAC type and an enciphering by cyclic permutation at two points of cut, i.e. by mutually independent cyclic permutations of the chrominance signals C and luminance signals from abscissa $a_c$ and $a_y$, respectively, by using a sampling frequency $f_o$, characterized in that upon reception a sampling frequency $f_r$ is used which is different from $f_o$ and related to the latter by the relation $f_r=(q/p)f_o$, $p$ and $q$ being integers, in that the new addresses of points of cut are chosen equal to the integral values closest to the results $a'_c$ and $a'_y$ of the operations $a'_c=(p/q)a_c$ and $a'_y=(p/q)a_y$, and in that at the beginning of the writing operation of each component C or Y in the memory, from the abscissa $a'_c$ or $a'_y$ respectively, the sampling frequency $f_r$ is subjected either to a phase advancement which, expressed in a sampling period $\tau_r=1/f_r$, is equal to the fractional part $g_c$ or $g_y$ of the result $a'_c$ or $a'_y$ when $g_c$ or $g_y$ is less than $1/2$ or less than or equal to $1/2$, or to a phase delay equal to $1-g_c$ or $1-g_y$ when $g_c$ or $g_y$ is higher than or equal to $1/2$ or higher than $1/2$.

2. A method of decoding and deciphering signals having been subjected to an encoding of the MAC type and an enciphering by cyclic permutation at one point of cut, i.e. by cyclic permutation of the assembly of the chrominance signals C and luminance signals from an abscissa $a$ situated in the chrominance signal by using a sampling frequency $f_o$, characterized in that upon reception a sampling frequency $f_r$ is used different from $f_o$ and connected with the latter by the relation $f_r=(p/q)f_o$, $p$ and $q$ being integers, in that the new address of the point of cut is chosen equal to the integral value closest to the result a' of the operation a'=(p/q)a, and in that at the beginning of the operation of writing the component C into the memory from the abscissa a', the sampling frequency $f_r$ is subjected either to a phase advancement which, expressed in a sampling period $\tau_r=1/f_r$, is equal to the fractional part g of the result a' when g is less than $1/2$ or less than or equal to $1/2$, or to a phase delay equal to $1-g$ when g is higher than or equal to $1/2$ or higher than $1/2$.

3. A method as claimed in Claim 1, characterized in that, when the maximum address in the chrominance or luminance memory is reached, the operation of writing the samples at the beginning of the chrominance or luminance memory is restarted after having marked a response time corresponding to a few transition samples and after having caused the sampling frequency $f_r$ to be subjected to a phase delay which, expressed in a sampling period $\tau_r=1/f_r$, is equal to the fractional part $h_c$ or $h_y$ of the result $\delta'_c$ of the

operation $\delta'_c=(p/q)\delta_c$ or $\delta'_y=(p/q)\delta_y$, $\delta_c$ being equal to the number of sampling intervals at the frequency $f_o$ which separate the first useful sample C transmitted from the repeated sample which follows the last useful sample C transmitted and $\delta_y$ being equal to the number of sampling intervals at the frequency $f_o$ which separate the first useful sample Y transmitted from the repeated sample which follows the last useful sample Y transmitted.

4. A method as claimed in Claim 2, characterized in that besides the response times which correspond to a few transition samples and which are marked upon passage from the operation of writing in the chrominance memory to that of writing in the luminance memory and then from the operation of writing in the luminance memory again to that of writing in the chrominance memory, the sample frequency $f_r$ is caused to be subjected after the first response time to a phase delay which, expressed in a period $\tau_r$, is equal to the fractional part $h_c$ of the result $\delta'_c$ of the operation $\delta'_c=(p/q)\delta_c$, $\delta_c$ being equal to the number of sampling intervals at the frequency $f_o$ corresponding to the sum of the signal C and of the first transition and after the second response time to a phase delay equal to the fractional part $h_y$ of the result $\delta'_y$ of the operation $\delta'_y=(p/q)\delta_y$, $\delta_y$ being equal to the number of sampling intervals at the frequency $f_o$ corresponding to the sum of the signal Y and of the second transition.

5. A method as claimed in any one of Claims 1 and 3, characterized in that, $p$ and $q$ being incommensurable with each other and $q$ being divisible by 2, by 3 or by 4, only q/2, q/3 or q/4 phase states of the sampling frequency $f_r$ are used, the considered advancements and delays being multiples of $(2/q)\tau_r$, $(3/q)\tau_r$ or $(4/q)\tau_r$ and the chosen advancements or delays being closest to the values calculated from the fractional parts of the results of the operations $a'(p/q)a$ and $\delta'=(p/q)\delta$.

6. A method as claimed in any one of Claims 1, 3 and 5, characterized in that upon reception the number of transition samples at the frequency $f_r$ is equal to the number of transition samples at the frequency $f_o$ inserted upon transmission multiplied by the fraction p/q and rounded off to the integral lower value or to the integral higher value.

7. A decoding and deciphering arrangement for carrying out the method claimed in any one of Claims 1, 3, 5 or 6, the said arrangement being essentially composed of input circuits, one of which is an analogue-to-digital converter which receives the scrambled MAC signals, of circuits for processing the luminance component, of circuits for processing the chrominance component and of deciphering control circuits, and being characterized in that the sampling frequency $f_r$ of the said converter is different from the corresponding sampling frequency $f_o$ used during the enciphering, but related to it by the relation $f_r=(q/p)f_o$, and in that it comprises means for adjusting the addresses of the points of cut to integral values closest to the values $a'_c$ and $a'_y$, and means for phase advancement or delay upon sampling according to the value of the fractional part $g_c$ or $g_y$ of the said values $a'_c$ and $a'_y$.

8. A method as claimed in any one of Claims 2 and 4, characterized in that, $p$ and $q$ being incommensurable with each other and $q$ being divisible by 2, by 3 or by 4, only q/2, q/3 or q/4 phase states of the sampling frequency $f_r$ are used, the considered advancements and delays being multiples of $(2/q)\tau_r$, $(3/q)\tau_r$ or $(4/q)\tau_r$ and the chosen advancements or delays being closest to the values calculated from the fractional parts of the results of the operations $a'(p/q)a$ and $\delta'=(p/q)\delta$.

9. A method as claimed in any one of Claims 2, 4 and 8, characterized in that upon reception the number of transition samples at the frequency $f_r$ is equal to the number of transition samples at the frequency $f_o$ inserted upon transmission multiplied by the fraction p/q and rounded off to the integral lower value or to the integral higher value.

10. A decoding and deciphering arrangement for carrying out the method claimed in any one of Claims 2, 4, 8 and 9, the said arrangement being essentially composed of input circuits, one of which is an analogue-to-digital converter which receives the scrambled MAC signals, of circuits for processing the luminance component, of circuits for processing the chrominance component, and of deciphering control circuits, and being characterized in that the sampling frequency $f_r$ of the said converter is different from the corresponding sampling frequency $f_o$ used during enciphering, but connected therewith by the relation $f_r=(q/p)f_o$, and in that it comprises means for adjusting the address of the point of cut to an integral value closest to the value $a'$, and means for phase advancement or delay upon sampling according to the value of the fractional part $g$ of the said value $a'$.

FIG.1

FIG.2

FIG.3a

FIG.3b

FIG.3c

FIG.4